# EUROPÄISCHE PATENTANMELDUNG

(11) **EP 1 396 946 A1**
(43) Veröffentlichungstag der Anmeldung: **10.03.2004**
(21) Anmeldenummer: 02020063.0
(22) Anmeldetag: 06.09.2002
(51) Int. Cl.: H04B 7/005, H04L 1/00

(54) **Vorrichtung und Verfahren zur Steuerung der Sendeleistung in einem Mobilkommunikationssystem**

(71) Anmelder: SIEMENS AKTIENGESELLSCHAFT, 80333 München (DE)
(72) Erfinder: Ball, Carsten, Dr., 76764 Rheinzabern (DE); Ivanov, Kolio, Dr., 81369 München (DE); Monschau, Joerg, 81379 München (DE); Müllner Robert, 81379 München (DE); Rehfuess, Ulrich, 81475 München (DE); Schreib, Franz, 81475 München (DE)

(57) **Zusammenfassung**

Die Erfindung bezieht sich auf ein Verfahren zum Erzeugen eines Sendesignals zum Übertragen von Daten und/oder Signalisierungen über eine Funk-Schnittstelle (V) in einem FunkKommunikationssystem (GSM), bei dem die Daten und/oder Signalisierungen bestimmten Übertragungserfordernissen zugeordnet sind, das Sendesignal mit einer eingestellten Leistung (PC; S2) erzeugt und übertragen wird und bei der Einstellung der jeweiligen Leistung einer oder mehrere Zielwerte (C/I) in Abhängigkeit von der Systemlast sowie der gewünschten Übertragungsqualität verwendet werden.

Um die Gesamtinterferenz im Funknetz zu reduzieren, wird vorgeschlagen, dass als der Zielwert für die Leistungseinstellung des Sendesignals ein Zielwert (C/I) aus einer Vielzahl, zumindest zwei möglichen Zielwerten (C/I) verwendet wird, wobei die möglichen Zielwerte (C/I) jeweils Übertragungserfordernissen zugeordnet sind und entsprechend der Zuordnung der zu übertragenden Daten und/oder Signalisierungen verwendet werden.

## Beschreibung

Die Erfindung bezieht sich auf Verfahren zum Erzeugen eines Sendesignals zum Übertragen von Daten und/oder Signalisierungen über eine Funk-Schnittstelle in einem Funk-Kommunikationssystem mit den oberbegrifflichen Merkmalen des Patentanspruchs 1 sowie eine Vorrichtung, insbesondere Sendeund Empfangsstation eines solchen Kommunikationssystems zum Durchführen des Verfahrens.

In Funk-Kommunikationssystemen, insbesondere zellularen Funk-Kommunikationssystemen gemäß beispielsweise dem Standard GSM (General System for Mobile telecommunications), insbesondere gemäß dem Paketdatendienst GPRS (General Paket Radio System) oder EDGE (Enhanced Data Rates for GSM Evolution) findet eine Kommunikation zwischen netzseitigen Sende- und Empfangsstationen sowie teilnehmerseitigen, zumeist mobilen Stationen als Datenendgeräten statt. Auf Grund der zunehmenden Anzahl von Teilnehmern und entsprechend teilnehmerseitigen Stationen und der Einführung von Paketdatendiensten besteht eine erhöhte Anforderung bezüglich kapazitätssteigernden Verfahren in derartigen Funk-Kommunikationssystemen. Bevorzugt werden dabei Verfahren, die eine Kapazitätserhöhung des Netzes ohne Hardwaremodifikationen und ohne zusätzlichen Standorten von netzseitigen Sende- und Empfangsstationen ermöglichen.

Allgemein ist die Gesamtanzahl verfügbarer Funkressourcen in einer Funkzelle einer derartigen Sende- und Empfangsstation von der Bandbreite, die einem Netzbetreiber zugewiesen ist, und der Wiederbenutzbarkeit (re-use) der Frequenzen in dem Einsatzgebiet abhängig. Das belegte Frequenzspektrum hängt von regulatorischen Bedingungen und Lizenzkosten ab. Der Wiederbelegungsfaktor und die Anzahl benutzter Zeitschlitze können wesentlich durch Anforderungen des Betreibers an moderate Kosten beeinflusst werden.

In öffentlichen Telefonnetzen wird die Dienstequalität durch die Wahrscheinlichkeit einer Rufblockierung gekennzeichnet, die durch die Anzahl blockierter Rufe auf Grund des Fehlens von Übertragungskanälen definiert wird. Diese Rufblockierungswahrscheinlichkeit wird auch als harte Blockierung bezeichnet. In zellularen Mobilfunksystemen kann der bediente Verkehr zusätzlich auch durch sogenanntes Soft-Blocken beschränkt werden. Dabei wird ein Ruf soft-geblockt bezeichnet, falls die Verschlechterung der Sprachqualität durch Interferenz auf gemeinsamen und benachbarten Kanälen durch Wiederbenutzung in Zellen nicht akzeptierbar wäre. In einem solchen Fall könnte selbst dann, wenn die Kanäle physikalisch verfügbar wären, der Interferenzpegel so hoch werden, dass das Hinzufügen eines zusätzlichen Rufs zu dem Netz die Dienstequalität einer bestimmten Anzahl bestehender Rufe verschlechtern würde. Jeglicher Verkehr, der diese gewünschte Dienstequalität beeinträchtigt würde, wird unterbunden bzw. nicht zugelassen und somit soft-geblockt. In zellularen Mobilfunksystemen wird der zulässige Verkehr und somit die Kapazität durch das Minimum des hard- und soft-geblockten Verkehrs derart bestimmt, dass sowohl die Dienstequalitätskriterien des Hard-Blockens als auch des Soft-Blockens erfüllt werden.

Das Soft-Blocken hängt wesentlich von dem angewendeten Sprach-Kodex ab, also z.B. der Auswahl von AMR Full-Rate (AMR FR: AMR: Adaptive Multi Rate ), AMR Half-Rate (AMR HR), erweiterter bzw. enhanced Full-Rate (EFR), GSM Full-Rate (GSM FR) oder GSM Half-Rate (GSM HR). AMR Kodex bestehen aus einer Menge von 8 Kodex mit unterschiedlicher Robustheit und Datenraten zwischen 12.2 und 4.7 kbps, wobei einem Teilnehmer ein aktiver Kodexsatz ACS (active codec set) von 4 Kodex zugewiesen wird und die Verbindungsanpassung (Link Adaptation) jeweils den je nach Kanalbedingungen geeignetsten Kodex auswählt. Bei GPRS/EDGE-Datendiensten stehen für GPRS die 4 Kodierschemas CS1,..,4 und für EDGE die 9 Kodierschemas MCS1,...,9 für eine Verbindung zur Auswahl.

Eine Kapazitätserhöhung durch Verdichten der Wiederverwendung von Ressourcen verursacht eine Verschlechterung des Signal- bzw. Träger-zu-Interferenz-Verhältnisses (C/I: Carrier to Interference) innerhalb des Funk-Netzes. Diese Verschlechterung kann z.B. durch das Verringern der Interferenz kompensiert werden. Derzeitig verwendete Infrastrukturausstattungen unterstützen Merkmale wie eine Leistungssteuerung (PC: Power Control) und diskontinuierliche Übertragung (DTX) für eine Interferenzreduzierung sowie Frequenzspringen (FH: Frequency Hopping) für eine Interferenzmittelung.

Bei dem derzeit verwendeten GSM wird ein Ziel-C/I-Wert gesetzt, auf welchen ein verwendeter Leistungssteuerungs-Algorithmus den Leistungspegel einstellt. Dieser Ziel-C/I-Wert ist ein für alle Sprach-Kodex einheitlich fester Wert.

Bei GSM beruht der Leistungssteuerungs-Algorithmus auf Messungen der empfangenen Funksignalstärke bzw. des Pegels und der empfangenen Signalqualität. Diese Messungen werden für jeden empfangenen SACCH-Mehrfach-Übertragungsrahmen (SACCH: Slow Associated Control CHannel - für Signalisierungen) ermittelt und berichtet, wobei es sich dabei um 104 TDMA-Übertragungsrahmen (TDMA: Time Division Multiplex Access) mit einer Gesamtdauer von 480 ms für einen Transportkanal (TCH: Transport CHannel) bzw. 102 TDMA-Übertragungsrahmen bzw. - blöcken mit einer Dauer von 470,8 ms für einen SDCCH (SDCCH: Stand-alone Dedicated Control CHannel - für Signalisierungen) besteht.

Nach geeigneten Filtermaßnahmen werden die ermittelten bzw. gemessenen Parameter in der netzseitigen Sende- und Empfangsstation mit deren oberen und unteren Leistungsteuerungs-Schwellenwerten, welche durch ein Betriebs- und Wartungszentrum festgelegt werden, verglichen, um eine Leistungssteigerung oder Leistungsreduzierung zu entscheiden. Nach einer Entscheidung für eine Änderung der Leistungssteuerung wird eine Leistungssteuerungs-Routine ausgeführt, wobei diese eine gewünschte Sendeleistung bestimmt. Diese Sendeleistung wird bei der Erzeugung eines Sendesignals zum Übertragen von Daten und/oder Signalisierungen über eine Funk-Schnittstelle zwischen des Sende- und Empfangsstation und der teilnehmerseitigen Station berücksichtigt. Für Übertragungen von der teilnehmerseitigen Station zur netzseitigen Sende- und Empfangsstation werden mit einem Leistungsteuerungsbefehl die entsprechenden erforderlichen Leistungspegel zu der teilnehmerseitigen Station übersendet, so dass diese die entsprechenden Parameter bei der Erzeugung ihrer Sendesignale verwenden kann. Abgesehen von dem Aufbau einer Verbindung bzw. dem Start einer Aussendung ändert eine teilnehmerseitige Station ihre Sendeleistung nicht unmittelbar auf den derart übermittelten und angeforderten Leistungswert. Die maximale Änderungsrate beträgt 2 dB pro 60 ms.

Die Aufgabe der Erfindung besteht darin, ein Verfahren zum Erzeugen eines Sendesignals zum Übertragen von Daten und/oder Signalisierungen über eine Funk-Schnittstelle mit Blick auf die Leistungssteuerung und die Reduzierung von Interferenzen zu verbessern.

Die Aufgabe der Erfindung wird durch ein Verfahren zum Erzeugen eines Sendesignals zum Übertragen von Daten und/oder Signalisierungen über eine Funk-Schnittstelle mit den Merkmalen des Patentanspruchs 1 bzw. eine Kommunikationssystem-Vorrichtung zum Durchführen eines solchen Verfahrens mit den Merkmalen des Patentanspruchs 18 gelöst.

Ausgehend von der Situation, dass beim Erzeugen eines Sendesignals zum Übertragen von Daten und/oder Signalisierungen das Sendesignal mit einer eingestellten Leistung erzeugt und übertragen wird und bei der Einstellung der jeweiligen Leistung ein Zielwert verwendet wird und außerdem die Daten und/oder Signalisierungen bestimmten Übertragungserfordernissen zugeordnet sind, wird die Interferenzsituation im Netz, insbesondere die Interferenzsituation in einer Funkzelle dadurch verbesserbar, dass als der Zielwert für die Leistungseinstellung des Sendesignals ein Zielwert aus einer Vielzahl von möglichen Zielwerten verwendet wird, wobei die möglichen Zielwerte jeweils Übertragungserfordernissen zugeordnet sind und entsprechend der Zuordnung der zu übertragenden Daten bzw. Signalisierungen ausgewählt bzw. verwendet werden.

Vorteilhafte Ausgestaltungen sind Gegenstand von abhängigen Ansprüchen.

Vorteilhafterweise können als Übertragungserfordernisse die für die Übertragung der Daten bzw. Signalisierungen zu verwendenden Übertragungsdienste oder zu verwendende Sprach-Kodex zugeordnet werden. Dadurch ist es möglich, Daten oder Signalisierung mit geringen Anforderungen des Signal- bzw. Träger-zu-Interferenz-Verhältnisses bei dem erforderlichen Übertragungsdienst bzw. Sprach-Kodex auch nur mit einem entsprechend niedrigen Signal-zu-Interferenzverhältnis zu berücksichtigen und somit nicht mit einem hohen Träger-zu-Interferenz-Verhältnis bei der Leistungsregelung berücksichtigen zu müssen, welches für alle verschiedenartigsten Übertragungsbedingungen als Mindestanforderung anzusetzen ist. Entsprechend werden die Zielwerte vorzugsweise Träger-zu-Interferenz-Verhältnissen (C/I) zugeordnet, die für verschiedene Übertragungserfordernisse eine sinnvolle Abstufung ermöglichen.

Sind für die Übertragung von Daten oder Signalisierungen über beispielsweise einen unidirektionalen Kanal verschiedene Zielwerte aus der Vielzahl der Zielwerte auswählbar, so wird vorzugsweise ein geringst möglicher Zielwert ausgewählt, um eine optimale Interferenzreduzierung ermöglichen zu können. Bei der Auswahl des Zielwerts bzw. der Zuordnung der Vielzahl von Zielwerten zu bestimmten Übertragungserfordernissen können auch Faktoren berücksichtigt werden, wie die Möglichkeit einer Nutzung von Übertragungskanälen mit oder ohne Frequenzhopping. Bei der Möglichkeit des Wechsels einer Verbindung von einer ersten zugewiesenen und momentan benutzten Frequenz auf eine andere Frequenz, eine sogenanntes Frequenzhopping, besteht neben der Auswahl möglicherweise verschiedener Zielwerte abhängig von beispielsweise einem durch den gewählten Sprach-Kodex zuzuordnenden C/I-Wert auch die Möglichkeit bei Bedarf einen anderen Frequenzkanal zu verwenden, um das Wechseln in einen ungünstigeren Sprach-Kodex oder ein Soft-Blocken für die gewünschte Verbindung vermeiden zu können.

Insbesondere können die Zielwerte bzw. die Zuordnung der Vielzahl von Zielwerten zu verschiedenen Übertragungserfordernissen auch abhängig von lokalen Bedingungen verschieden festgelegt werden. Lokale Bedingungen können dabei beispielsweise räumliche Hindernisse sein, welche eine Übertragung in einen abgeschatteten Bereich nur mit besonders hohen Anforderungen an den C/I-Wert ermöglichen oder welche durch Reflexionen zusätzliche Interferenzen durch Mehrwegeausbreitung verursachen, so dass ein gegenüber normalen Anwendungen erhöhter Zielwert bzw. insbesondere C/I-Wert erforderlich werden kann. Andere lokale Bedingungen sind beispielsweise elektromagnetischen Störquellen oder andere Funk-Kommunikationssysteme sowie Zellbereiche einer Funkzelle mit Überlappungen zu Nachbarzellen, in welchen Interferenzen durch Signale auf gleichen oder benachbarten Ressourcen störend wirken können.

Zweckmäßigerweise können die Zielwerte für Übertragungen in einem Signalisierungskanal verschieden zu den Zielwerten für Übertragungen in Nutzdatenkanälen festgelegt werden, da die Anforderungen an die Übertragungssicherheit bzw. Übertragungsqualität bei der Übertragung von Signalisierungen bzw. Nutzdaten verschieden hoch sind. Insbesondere innerhalb der Signalisierungsdaten kann wiederum eine Unterteilung nach deren Wichtigkeit vorgenommen werden, so dass auch diesbezüglich abgestaffelte bzw. zusätzlich abgestaffelte Zielwertvorgaben festgelegt werden können.

Vorteilhaft ist auch die Möglichkeit eines intrazellularen Wechsels auf eine andere Verbindung, insbesondere auf einen anderen Kanal, falls der vorgesehene bzw. erforderliche Zielwert auf der momentan verwendeten Verbindung nicht bzw. nicht mehr erreichbar ist, wobei dies insbesondere dann gilt, wenn die andere Verbindung einen anderen, insbesondere niedrigeren Zielwert zulässt, bei dem trotzdem eine ausreichend sichere Übertragung möglich ist. Ein derartiger intrazellularer Wechsel auf eine andere Verbindung bzw. auf einen anderen Kanal kann auch dann vorteilhaft sein, wenn die andere Verbindung weniger durch Interferenz gestört werden würde.

Eine weitere Ausgestaltung erlaubt die Definition mehrerer Zielwerte pro verwendeten Kodex, welche eine gute, eine mittlere und eine gerade noch akzeptable Qualität zulassen. Je nach Systemlast und Netzinterferenz schaltet das Netzwerk zwischen den Zielwerten automatisch und selbständig um. Das Netzwerk kann auch selektiv erst Teilnehmer niedrigerer Priorität auf einen niedrigeren Zielwert setzen, um so für wichtigere Teilnehmer eine gleichbleibend hohe Qualität bieten zu können. AMR Kodex erlauben dem Netz bei Überlast das Umschalten auf Kodex mit größerer Robustheit durch Link Adaptation, für welche ebenfalls niedrigere C/I-Zielwerte gelten.

Vorteilhaft ist die Anwendung der Verfahrensweise auch für Datenkodierschematas, z.B. gemäß GPRS CS1,...4 und EDGE MCS1,...9.

Auch ist eine gemessene Teilnehmer- bzw. Stationsgeschwindigkeit bzw. deren Einfluss auf die Übertragungsqualitäten etc. und damit auf den Zielwert berücksichtigbar. Die Zielwerte können daher auch abhängig von einer gemessenen Stationsgeschwindigkeit ausgewählt werden.

Ein Ausführungsbeispiel wird nachfolgend anhand der Zeichnung näher erläutert. Es zeigen:
- Fig. 1: einzelne Stationen eines beispielhaften zellularen Funk-Kommunikationssystems;
- Fig. 2: eine beispielhafte Berechnung von erzielbaren Qualitäten bei der Verwendung verschiedener Parameter;
- Fig. 3: eine weitere derartige Darstellung von Versuchsergebnissen und
- Fig. 4: ein Ablaufdiagramm für ein beispielhaftes Verfahren zum Erzeugen von Sendesignalen unter Berücksichtigung ausgewählter Zielwerte für das Träger-zu-Interferenz-Verhältnis als Parameter bei der Bestimmung der Sendeleistung.

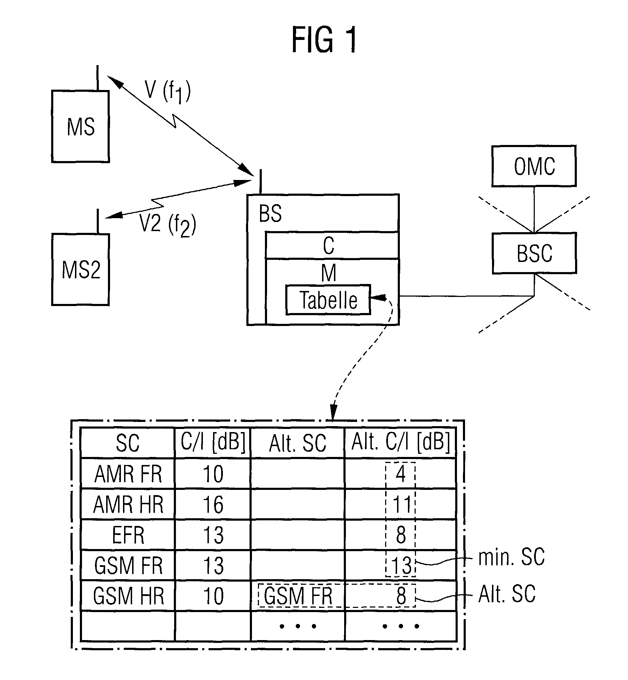

Wie in Fig. 1 angedeutet, besteht ein Kommunikationssystem, wie beispielsweise das Funk-Kommunikationssystem gemäß dem Standard GSM (Global System for Mobile telecommunications) aus einer Vielzahl von Einrichtungen, Vorrichtungen und Funktionen, die zum Übertragen von Sprache, Daten und Informationen zwischen teilnehmerseitigen Stationen MS, MS2 erforderlich sind. Die hier beschriebene Verfahrensweise lässt sich aber auch auf andere Kommunikationssysteme übertragen.

Um mit Hilfe einer teilnehmerseitigen Station MS, MS2, z.B. einem zellularen Mobilfunkgerät, kommunizieren zu können, wird eine funkgestützte Verbindung V bzw. V2 zu einer Sendeund Empfangsstation BS aufgebaut, welche nachfolgend auch als Basisstation bezeichnet wird. Um einen zellularen Funksystem gleichzeitig mehrere Verbindung V, V2 zu verschiedenen teilnehmerseitigen Stationen MS bzw. MS2 aufbauen und unterhalten zu können, werden den einzelnen der Verbindung V, V2 jeweils eigenen und eineindeutige Ressourcen zugewiesen. Neben der Zuweisung von bestimmten Zeitschlitzen oder Frequenzen f₁, f₂ werden auch Kodierungsverfahren verwendet.

Die Basisstation BS weist als netzseitige Zugangsstation üblicherweise eine Steuereinrichtung C und einen Speicher M auf, welche über für die Betrieb erforderliche Parameter und Steuerprogramme und entsprechende Ausführungsmöglichkeiten verfügen. Die Basisstation BS kann optional auch auf separate Einrichtungen zum Empfangen bzw. Sende aufgesplittet sein. Die Basisstation BS ist mit einer Basisstations-Steuereinrichtung BSC verbunden, welche den Betrieb mehrerer an dieser angeschlossener Basisstationen koordiniert und steuert. Insbesondere werden beispielsweise die Zuweisungen von Ressourcen für einzelne der Verbindungen V, V2 von der Basisstations-Steuereinrichtung BSC verwaltet. Die Basisstations-Steuereinrichtung BSC weist neben den Verbindungen zu verschiedenen Basisstationen BS auch Verbindung zu anderen netzseitigen Einrichtungen auf, beispielsweise einem Betriebs- und Wartungszentrum OMC, Heimatregistern, Besucherregistern und Schnittstellen zu fremden Kommunikationssystemen.

Beim Aufbau einer Verbindung V zu einer teilnehmerseitigen Station MS sowie während des Übertragens von Daten bzw. Datenblöcken über diese Schnittstelle V wird durch die netzseitige Basisstation BS eine Leistungssteuerung vorgenommen, welche gewährleistet, dass die übertragenen Datenpakete in Aufwärtsrichtung zu der teilnehmerseitigen Station MS bzw. in Abwärtsrichtung zu der netzseitigen Station BS mit ausreichender Leistung übertragen werden, um Datenverluste ganz oder zumindest bis auf nur einen begrenzten Anteil zu vermeiden. Bei Datendiensten wie GPRS und EDGE kann diese Leistungssteuerung auch von der Basisstations-Steuereinrichtung BSC übernommen werden.

Beim beispielhaft beschriebenen Kommunikationssystem GSM beruht der Leistungssteuerungs-Algorithmus auf Messungen der empfangenen Funksignalstärke und der Qualität des empfangenen Signals. Diese Messungen werden für jeden SACCH-Mehrfachübertragungsrahmen durchgeführt und bereitgestellt, wobei ein SACCH-Mehrfachübertragungsrahmen aus 104 TDMA-Übertragungsblöcken bzw. -rahmen für einen Transportkanal (TCH) bzw. 102 TDMA-Übertragungsblöcken für einen SDCCH besteht.

Bei GSM überwacht die netzseitige Station, insbesondere die Basisstation BS die Leistungssteuerung (PC/Power Control) für sowohl die Abwärtsverbindung als auch die Aufwärtsverbindung. Für die Aufwärtsverbindungs-Leistungssteuerung untersucht die netzseitige Sende- und Empfangsstation BS ihre eigenen Messungen, um die Leistungsanforderungen bei der teilnehmerseitigen Station MS abzuschätzen. Für die Abwärtsverbindungs-Leistungssteuerung verwendet die Basisstation BS Ergebnisse von Messungen, die durch die teilnehmerseitige Station MS durchgeführt und signalisiert wurden, um den Leistungspegel für Abwärtsverbindungsübertragungen einzustellen.

Die empfangene Signalstärke bzw. der empfangenen Signalpegel wird auf einen sogenannten RXLEV-Wert abgebildet. Der RXLEV-Wert ist Null, falls der empfangene Signalpegel (RSL: Received Signal Level) geringer als -110 dBm ist. Der RXLEV-Wert ist 1, falls -110 dBm <= RSL < -102 dBm gilt und der RXLEV-Wert beträgt 63, falls RSL < -48 dBm gilt. Weitere RXLEV-Werte sind in den dazwischen liegenden Bereichen zugeordnet.

Die Signalqualität des empfangenen Signals wird durch das Abschätzen der Chipfehlerrate bestimmt, d. h. der Bitfehlerrate (BER) vor der Kanaldekodierung, wobei die Metrik des Viterbi-Kanalequalizers und/oder die des Viterbi-Konvolutions-Dekoders verwendet wird. Die Bitfehlerrate wird als Qualitätsmaß auf einen sogenannten RXQUAL-Wert zwischen 0 und 7 abgebildet. Falls Frequenzspringen (Frequency Hopping) angewendet wird, werden die RXQUAL-Werte in den Mittelungsprozess eingeschlossen. Beide Parameter, RXLEV und RXQUAL, werden bei der Bestimmung in der teilnehmerseitigen Station MS von dieser zu der diese bedienenden Basisstation BS über den Kanal SACCH gesendet. Dadurch ist die Basisstation BS in der Lage, die Qualität der Verbindung in Abwärtsrichtung zu überwachen. Bei der Vorverarbeitung für die Leistungssteuerung werden die Messergebnisse in der Basisstation BS bzw. dem Basisstations-Subsystem gemittelt. Bei neueren Systemen wird der RXQUAL-Wert durch die Bitfehlerwahrscheinlichkeit, den sogenannten BEP (Bit Error Probability) ersetzt, welche mit 63 Stufen eine höherer Genauigkeit aufweist.

Nach einer geeigneten Filterung der gemessenen Parameter werden diese Werte in der Basisstation BS mit den diesen zugeordneten oberen und unteren Schwellenwerten für die Leistungssteuerung verglichen, wobei die Schwellenwerte durch das Betriebs- und Wartungszentrum OMC festgelegt werden, um zu entscheiden, ob ein Leistungsanstieg oder eine Leistungsverringerung erforderlich sind. Die Basisstation BS bzw. das Basisstations-Subsystem kommt abhängig von den Vergleichsergebnissen zu einer Leistungssteuerungsentscheidung.

Nach einer Leistungssteuerungsentscheidung mit einem Ergebnis einer erforderlichen Leistungsänderung wird ein Leistungssteuerungs-Algorithmus gestartet, welcher die Prozedur der Leistungssteuerungs-Änderung vornimmt. Bei diesem Punkt des Algorithmus wird der gewünschte bzw. erforderliche Sendeleistungspegel bestimmt.

Bis zu diesem Punkt der Leistungsregelung berücksichtigen die momentan verwendeten Leistungssteuerungs-Algorithmen die verschiedenen Anforderungen hinsichtlich Signal- bzw. Träger-zu-Interferenz-Verhältnissen C/I für verschiedene Kodex, insbesondere Sprach-Kodex nicht. Für die Leistungssteuerung wird derzeit für alle Kodex in dem Kommunikationssystem ein einheitlicher. Satz von Schwellenwerten verwendet. Vorteilhaft ist daher, an insbesondere dieser Stelle des Leistungsregelungs-Algorithmus eine Berücksichtigung verschiedener Trägerzu-Interferenz-Verhältnis-Anforderungen zu berücksichtigen, beispielsweise für die Sprach-Kodex EFR und AMR FR.

Nach der Bestimmung des gewünschten Sendeleistungspegels wird dieser Wert für Übertragungen von der Basisstation BS zu der teilnehmerseitigen Station MS bei der Erzeugung von Sendesignalen verwendet. Sofern der gewünschte bzw. erforderliche Sendeleistungspegel seitens der Basisstation BS für Übertragungen in Abwärtsrichtung bestimmt wurde, wird der bestimmte Sendeleistungspegel an die teilnehmerseitige Station MS signalisiert, so dass diese für zukünftige Übertragungen bei der Erzeugung ihres Sendesignals den aktualisierten Sendeleistungspegel verwendet.

Durch ein mögliche Reduzierung des Interferenzpegels in dem Netz bzw. dem Funkbereich der Basisstation BS kann vorteilhafterweise die Anzahl verwendeter Ressourcen, insbesondere Zeitschlitze deutlich erhöht werden.

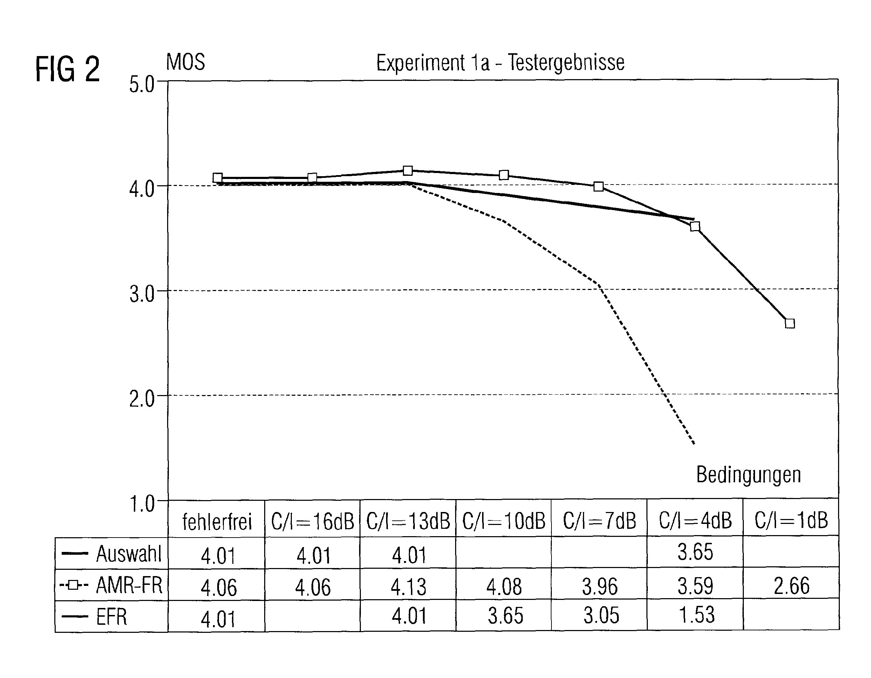

Die durch eine Teilnehmer, welcher mit der teilnehmerseitigen Station MS telefoniert, wahrgenommene Sprachqualität hängt deutlich von den Bedingungen des Träger-zu-Interferenz-Verhältnisses C/I ab. Dabei sind die Träger-zu-Interferenz-Verhältnisse C/I für die verschiedenen verfügbaren Sprach-Kodex, z.B. GSM FR, GSM HR, EFR, AMR FR und AMR HR verschieden. AMR-Charakterisierungsversuche (gemäß 3G TR 26.075) haben gezeigt, dass für jeden der verschiedenen AMR Kodex verschiedene Sättigungspunkte bei der wahrnehmbaren Sprachqualität feststellbar sind. Eine Zunahme des Träger-zu-Interferenz-Verhältnisses C/I darüber hinaus führt nicht zu einer signifikanten Verbesserung der wahrgenommenen Sprachqualität. Das Diagramm aus Fig. 2 stellt die Ergebnisse eines ersten Experiments 1a der AMR-Charakterisierungstests dar, wobei ein Vergleich zwischen EFR und AMR FR durchgeführt wurde. Die x-Achse stellt die C/I-Bedingungen dar und die y-Achse zeigt die wahrgenommene Sprachqualität. Die wahrgenommene Sprachqualität wird dabei in gemittelten Meinungsbewertungen (MOS: Mean Opinion Scores) definiert.

Sichtbar wird, dass verschiedene Ziel-C/I-Werte in dem Leistungssteuerungs-Algorithmus für verschiedene Kodex vorteilhaft verwendet werden können. Für die betrachteten beiden Kodex können verschiedene Sättigungspunkte festgestellt werden. Bei AMR FR wird eine sehr gute Sprachqualität bereits bei einem C/I-Wert > 7 dB erzielt bzw. wahrgenommen, während der Sättigungspunkt bei EFR bei einem C/I-Wert = 13 dB erreicht wird. Ein weiterer Anstieg der Leistung würde für einen geführten Ruf zu einem höheren C/I-Wert führen, jedoch keine signifikante Verbesserung der Sprachqualität bewirken. Die Zunahme des C/I-Wertes für diesen Ruf würde jedoch den Interferenzpegel in dem Netz allgemein erhöhen und daher die C/I-Werte für andere Verbindungen verringern. Daher kann eine Kapazitätszunahme erzielt werden, falls die Interferenz im Netz reduziert werden kann. Eine höhere Anzahl von Teilnehmern bzw. teilnehmerseitigen Stationen MS, MS2 kann bedient werden, falls der Interferenzpegel in dem Netz verringert werden kann. Ausgehend von der Situation eines für alle verschiedenen Sprach-Kodex ausreichenden einheitlichen C/I-Wertes kann somit die Gesamtinterferenz im Netz verringert werden, wenn für Sprach-Kodex mit geringeren Anforderungen an den C/I-Wert auch nur ein geringerer C/I-Wert bei der Leistungsregelung zur Erzeugung des Sendesignals berücksichtigt und verwendet wird.

Für AMR sollten, verschiedene Ziel-C/I-Werte für jeden Kodex-Modus verwendet werden, welcher in dem aktiven Kodex-Satz (ACS: active codec set) definiert ist. In diesem Fall wird die Leistung abhängig von den Anforderungen des durch den Verbindungsaufbau angeforderten Kodex eingestellt. Falls nur ein Ziel-C/I-Wert für alle AMR-Kodex gesetzt ist, stellt der Leistungsregelungs-Algorithmus den Leistungspegel auf diesen Wert. Dies kann z. B. der Sättigungspunkt für die Qualitätskurve sein. In diesem Fall wird die Leistungsreduzierung angewendet, wenn dieser Schwellenwert überschritten wird.

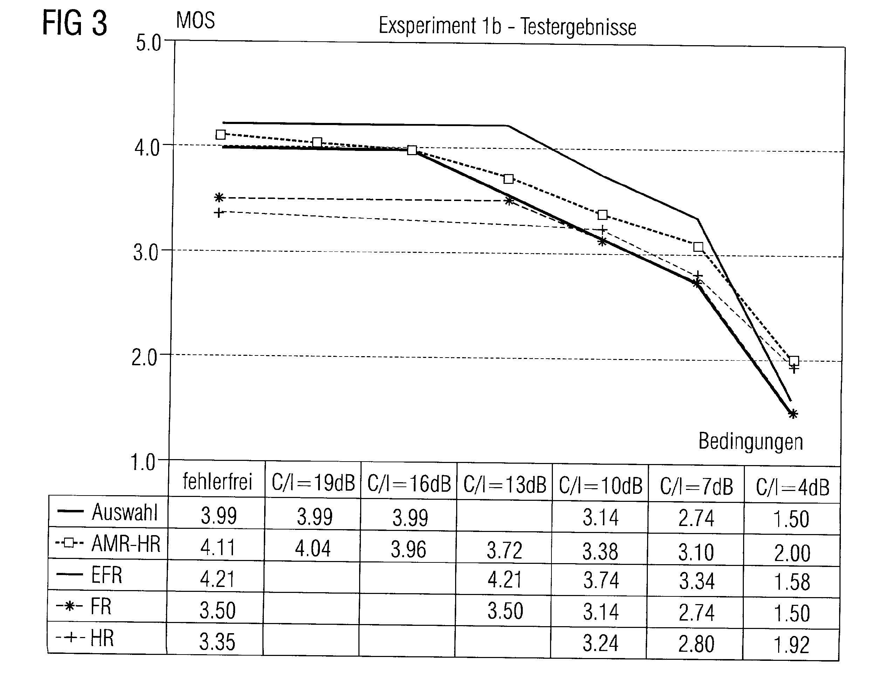

Dasselbe gilt auch für die anderen Kodex, auf die entsprechend verschiedene Sättigungspunkte bzw. Ziel-C/I-Werte angewendet werden können, wie dies aus Fig. 3 ersichtlich ist. Bei EFR wird der Sättigungspunkt bei C/I = 13 dB erreicht. Für die anderen Kodex gibt es keinen exakt festlegbaren Sättigungspunkt. Jedoch ist von einem bestimmten C/I-Pegel ab nur eine geringfügige Verbesserung der Sprachqualität feststellbar. Dieser Punkt kann vorteilhafterweise als Sättigungspunkt angenommen werden. Bei GSM HR wird dieser Punkt bei C/I = 10 dB erreicht, bei AMR HR bei 16 dB erreicht und bei GSM FR bei 13 dB erreicht. In diesem Bereich fällt die Entscheidung bezüglich der Festlegung des Sättigungspunktes dem Betreiber zu, welcher einen angemessenen Qualitätspegel zum Befriedigen der Anforderungen der Teilnehmer an die Sprachqualität festlegen muss.

Falls der Betreiber des Netzes die Netzkapazität unter der Bedingung, dass ein akzeptabler Qualitätspegel beibehalten wird, erhöhen möchte, kann er einen Ziel-MOS-Wert definieren. Dieser Ziel-MOS-Wert wird für verschiedene Kodex bei verschiedenen C/I-Verhältnissen erreicht. Z.B. kann die Zielqualität auf einen Wert von 3,5 MOS festgelegt werden, d. h. auf die Leistungsfähigkeit, die bei dem GSM FR-Codec bei guten Funkbedingungen erzielt wird. Gemäß der Ergebnisse der Experimente 1a und 1b, welche in der Fig. 2 und in der Fig. 3 skizziert sind, wird diese Qualität erzielt bei etwa 4 dB für AMR FR, 11 dB für AMR HR, 8 dB für EFR und 13 dB für GSM FR.

Anzumerken ist, dass es sich dabei um eine grobe Abschätzung handelt und dass beide Diagramme nicht auf eine gemeinsame Basis normiert wurden, was z.B. an der Leistungsfähigkeit des EFR-Kodex sichtbar ist, welcher verschiedene Werte in den beiden Experimenten zeigt. Für die Bestimmung der exakten oder möglichst gut geeigneten Ziel-C/I-Werte für die verschiedenen Kodex sollten daher die beiden Diagramme auf die gleiche EFR-Leistungsfähigkeit normiert werden und die Implementierungsverluste und ein möglicher Verlust auf Grund letztendlich nicht-idealer Verbindungskriterien sollten berücksichtigt werden.

Bei der Definition individueller Ziel-C/I-Werte für verschiedene Kodex kann die Leistung z.B. für teilnehmerseitige Stationen, welche AMR FR als Sprach-Kodex verwenden, bis auf einen C/I-Wert von 4 dB herab reduziert werden, anstelle der Definition eines allgemeinen Ziel-C/I-Wertes, welcher üblicherweise auf den schwächsten Kodex des Netzes bezogen ist.

Zusätzliche verschiedene Ziel-C/I-Werte können auch innerhalb eines Sprach-Kodex für Kanäle verwendet werden, auf denen Frequenzspringen zulässig bzw. nicht zulässig ist. Mit einer solchen Funktionalität kann die Auswirkung von Frequenzsprüngen bei dem Leistungssteuerungs-Algorithmus mit berücksichtigt werden.

Für jeden zugeordneten Steuerkanal, beispielsweise FACCH oder SACCH ist ebenfalls ein separater Ziel-C/I-Wert festlegbar. Diese Funktionalität ermöglicht eine Einstellung für Signalisierungs-Kanäle separat von der Leistungssteuerung der Verkehrskanäle bzw. Nutzdatenkanäle, so dass z.B. auch die Sicherheitsanforderungen für diese Kanäle individuell angepasst werden können. Dies ist insbesondere für Nutzdatenkanäle mit größerer Robustheit als bei Signalisierungskanälen zweckmäβig, da sonst die Leistungsregelung auf einem sehr niedrigen C/I-Zielwert die Nutzdatenübertragung erlauben würde, nicht jedoch die entsprechende Inband-Signalisierung.

Vorteilhaft ist auch die Festlegung verschiedener Ziel-C/I-Werte entsprechend der Bedeutung von Signalisierungs-Nachrichten. Beispielsweise sollte es möglich sein, die Nachricht "Leistung erhöhen" mit einem höheren Leistungspegel zu übertragen, als die Nachricht "Leistung reduzieren".

Bei zellularen Funk-Kommunikationsnetzen kann die Situation auftreten, dass der Ziel-C/I-Wert nicht erreicht werden kann, beispielsweise da die maximale Übertragungsleistung für die verwendete Verbindung bereits verwendet wird und/oder die Interferenz in dem Netz viel zu hoch ist. Dies gilt insbesondere für Netze mit einer hohen Wiederverwendung (reuse), beispielsweise mit Reuse-Faktoren von 1/1 oder 1/3.

Falls der Ziel-C/I-Wert nicht erreicht werden kann, ist eine intrazellulare Übergabe (handover) auf einen anderen Kanal bzw. eine andere Ressource vorteilhaft. Bei AMR Kodex ist auch die Verbindungsanpassung (Link Adaptation) auf den nächst robusteren Kodex im aktiven Kodexsatz (ActiveCodecSet) möglich, ohne den Kanal zu wechseln. Dafür müssen dann jedoch die C/I-Zielwerte zu den Verbindungsanpassungs-Schwellwerten passen, d.h. im Allgemeinen etwas darüber liegen. Eine solche erzwungene Übergabe sollte - wenn überhaupt nötig - vorteilhafterweise auf einen Kanal auf einem Träger durchgeführt werden, welcher für die Verwendung mit einem höheren Wiederverwendungs-Faktor eingeplant ist, z.B. auf einen BCCH-Träger, bei welchem ein Faktor 4/12 geplant ist. Auf Grund des höheren Wiederverwendungs-Faktors bei diesem Träger gibt es typischerweise eine geringere Interferenz als bei einer hohen bzw. dichten Wiederverwendung (tight reuse).

Diese Funktionalität ermöglicht in einer leichten Art und Weise simultan z.B. EFR- (oder GSM FR-, GSM HR-) und AMR-Kodex in dem gleichen hochkapazitiven Netz zu verwenden. Das derzeitige Problem der fehlenden Trennung der verschiedenen Kodex bei der Belegungsprozedur besteht bei der vorliegenden Verfahrensweise nicht mehr. Dies bedeutet, dass z.B. EFR- und AMR-Rufe bzw. -Verbindungen auf dem gleichen Träger belegt werden können. Falls ein bestimmter Qualitätspegel beibehalten werden soll, ist die Leistungsfähigkeit der schwächsten Verbindung zu berücksichtigen, in diesem Fall sind dies die C/I-Anforderungen für teilnehmerseitige Stationen mit dem EFR-Kodex. Dies führt zu einer drastischen Reduzierung der maximalen spektralen Effizienz im Vergleich zu der Verwendung von teilnehmerseitigen Stationen MS mit reinem AMR-Kodex. Auf Grund der höheren Robustheit der AMR-Kodex wird ein Betrieb mit einer hohen bzw. dichten Wiederverwendung bei hoher fraktionaler Last bei einer akzeptablen Qualität greifbar. Auf Grund des hohen Interferenzpegels bei dieser Konfiguration ist die Qualität bei der Verwendung des EFR-Kodex deutlich geringer, falls der Ziel-C/I-Wert von etwa 13 dB nicht erreicht werden kann. In diesem Fall kann eine Übergabe zu z.B. dem BCCH-Träger mit einem typischerweise geringeren Interferenz-Pegel durchgeführt werden, so dass der gewünschte Qualitätspegel beibehalten werden kann. Mit anderen Worten, EFR-Rufe können auf Transportkanälen (TCH) mit einer geplanten dichten Wiederverwendung (re use) belegt werden. Mit einer Erhöhung der Zelllast steigt auch der Interferenzpegel in dem Netz bzw. der Zelle an. Dies kann zu einer Reduzierung des C/I-Pegels für die entsprechende Verbindung führen. Sobald der Ziel-C/I-Wert für EFR nicht erreicht werden kann, wird entsprechend eine erzwungene Übergabe durchgeführt. Diese Funktionalität ermöglicht eine deutliche Erweiterung der Netzkapazität ohne eine Verschlechterung mit Blick auf die Übertragungs- bzw. Sprachqualität.

Während die Verfahrensweise vorstehend an Hand Sprach-Kodex beschrieben wurde, kann eine Übertragung auch auf allgemeine Übertragungserfordernisse zu verwendender Übertragungsdienste, insbesondere auch auf GPRS- und EDGE-Paket-Datendienste vorgenommen werden.

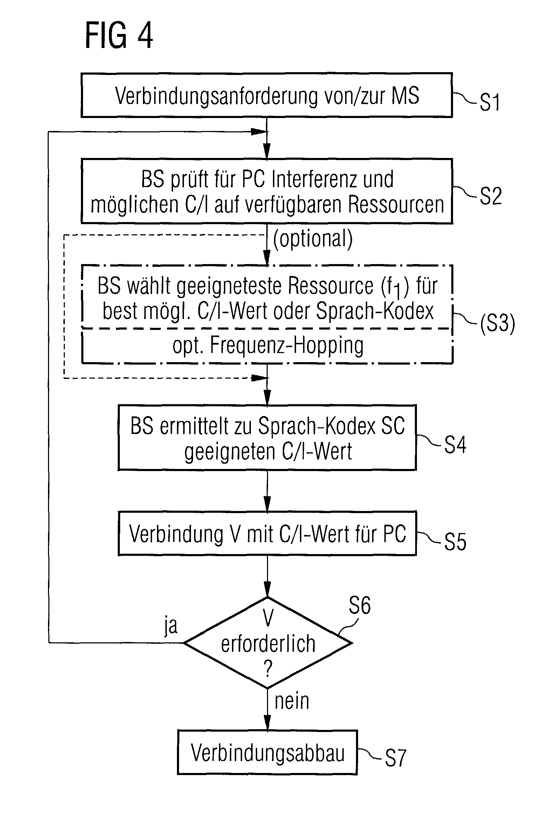

Wie aus Fig. 4 ersichtlich, besteht ein beispielhafter Verfahrensablauf bei der Erzeugung eines Sendesignals unter Berücksichtigung einer Leistungsregelung, bei welcher Zielwerte berücksichtigt werden, aus einer Abfolge von Verfahrensschritten. In einem ersten Verfahrensschritt S1 wird ein Verbindungsanforderung von der teilnehmerseitigen Station MS aus zur Basisstation BS oder in umgekehrter Richtung gesendet.

Bei einem zweiten Schritt S2 prüft die Basisstation BS die vorliegende Interferenz in dem entsprechenden Funkbereich und einen möglichen C/I-Wert auf den verfügbaren oder angeforderten Ressourcen (f₁, f₂, ..... ), um diese Werte bei der Leistungsregelung PC berücksichtigen zu können. Bei einem dritten Schritt S4 ermittelt die Basisstation BS zu dem geforderten Sprach-Kodex SC einer geeigneten C/I-Wert. Als Ressourcen können neben Frequenzen z.B. auch Zeitschlitze, Code oder Kanäle angefordert werden.

Zwischen den Schritten S2 und S4 wird eine geeignete Ressource f₁ und ein best möglicher C/I-Wert oder Sprach-Kodex ausgewählt. Optional kann auch ein Frequenzspringen durchgeführt werden, wie dies an Hand des Schrittes S3 vor dem dritten Schritt S4 skizziert ist.

Anschließend wird die angeforderte Verbindung V mit dem ermittelten geeigneten C/I-Wert über die verfügbare Ressource (f₁) aufgebaut bzw. bei aufgebauter Verbindung aufrechterhalten (Schritt S5). Nach einer folgenden Abfrage S6, ob die Verbindung V noch aufrechtzuerhalten bzw. erforderlich ist, findet entweder ein Rücksprung zur Prüfung der Netzsituation, also insbesondere der Interferenzsituation und möglicher C/I-Werte, oder ein Verbindungsabbau S7 statt. Bei AMR befindet sich vor dem Verbindungsschritt S5 noch der Verbindungsanpassungsprozess (LinkAdaptation), welcher bei gegebenem C/I evtl. noch eine Änderung des Kodex durchführt.

Wie aus der Tabelle gemäß Fig. 1 ersichtlich, welche beispielsweise in dem Speicher der Basisstation BS hinterlegt ist, ergeben sich verschiedene Vorgehensweisen und Alternativen bei der Verfahrensdurchführung. In der ersten Spalte wird der Sprach-Kodex SC eingetragen. Mit Hilfe der zweiten Spalte wird ein Ziel-C/I-Wert, angegeben beispielsweise in dB, eingetragen, welcher dem entsprechenden Sprach-Kodex zugeordnet wird. Bei der Durchführung der Leistungssteuerung kann somit direkt aus dem Speicher M ein geeigneter Ziel-C/I-Wert für den zu verwendenden Sprach-Kodex SC ausgelesen werden.

Für den Fall, dass eine Verbindung V mit ausreichenden Qualitätskriterien nicht aufbaubar oder aufrechtzuerhalten ist, bieten sich Wechsel zu anderen Parametern an. Sofern die beteiligten Stationen MS, BS für die entsprechenden Verfahrensweisen ausgelegt sind, kann beispielsweise ein Wechsel zu einem anderen Sprach-Kodex vorgenommen werden. In der Tabelle ist für den Fall einer nicht ausreichenden Qualität bei der Verwendung des Sprach-Kodex GSM HR mit einem Ziel-C/I-Wert von 10 alternativ ein Wechsel in dem Sprach-Kodex GSM FR mit einem alternativen Ziel-C/I-Wert von 8 angegeben. Für die AMR Kanäle FR/HR kann in der Tabelle jeder einzelne Kodex aufgeführt werden. Bei Kodexwechsel erfolgt der Wechsel normalerweise in den nächst robusteren Kodex des aktiven Kodexsatzes (ActiveCodecSet).

Sofern ein vorgegebener Ziel-C/I-Wert nicht erreicht werden kann, kann auch eine Übertragung mit geringeren alternativen Ziel-C/I-Werten vorgesehen werden, wie dies aus Spalte 4 der dargestellten Tabelle entnehmbar ist. Für AMR FR kann somit eine Reduzierung des Ziel-C/I-Wertes von 10 auf 4 vorgenommen werden. Diese Vorgehensweise bietet sich insbesondere bei Sprach-Kodex an, bei denen die Sprachqualität sich über eine große Spanne von C/I-Werten nur geringfügig verändert.

Eine weitere Ausgestaltung der Tabelle kann Zielwerte für sehr gute, mittlere und gerade noch akzeptable Qualität beinhalten. Das Netzwerk ist dann in der Lage bei Überlast, d.h. viel Interferenz für alle bzw. zuerst für Teilnehmer bzw. Stationen mit niedrigerer Priorität die Leistung zu senken. Damit geht zwar die Reduktion der Qualität einher, jedoch erlaubt die gleichzeitige Senkung der Interferenz auch die Bedienung von deutlich mehr Teilnehmern, um so Kapazitätsengpässe zu überbrücken. Gemäß Dienstegüte- (Quality of Service- ) Kriterien, kann so eine Differenzierung zwischen wichtigen und weniger wichtigen Stationen erzielt werden. Bei AMR /GPRS und EDGE mit Verbindungsanpassung (Link Adaptation) kann man solche Teilnehmer auch zunächst auf robustere Kodex/Kodierschemas mit geringeren Leistungs-Zielwerten zwingen.

Möglich ist auch die Inkaufnahme einer schlechteren Sprachqualität bzw. bei der Übertragung von reinen Daten einer schlechteren Datenqualität mit der Folge einer erneuten Anforderung von Datenpaketen oder redundanten Informationen, um eine erhöhte Kapazität des Netzes bei zur Not verschlechterten Qualitätsbedingungen erzielen zu können. Unterschieden werden kann somit auch zwischen gewünschten Ziel-C/I-Werten aus Spalte 2 und alternativen minimalen C/I-Werten, wie dies in den ersten Zeilen der vierten Spalte skizziert ist. Insbesondere ist auch eine variable Ansteuerung von je nach Bedarf reduzierten bzw. erhöhten C/I-Werten innerhalb dieser Spanne zwischen den beiden Werten möglich.

Alternativ zur Definition eines Ziel-C/I-Wertes für z.B. AMR kann auch ein Ziel-C/I-Schwellenwert für jeden Sprach-Kodex des aktiven Sprach-Kodex-Satzes angewendet werden. Bei dem Leistungsregelungs-Algorithmus soll entsprechend der momentane Sprach-Kodex berücksichtigt werden und die Leistungsanpassung soll individuell für jeden Sprach-Kodex unter Verwendung verschiedener Ziel-C/I-Werte durchgeführt werden. Bei einem angemessenen C/I-Offset kann eine Verschlechterung der Qualität auf Grund schneller Wechsel beim C/I-Wert vermieden werden, falls der Leistungsregelungs-Algorithmus nicht in der Lage ist, verschiedene Werte gleichzeitig anzupassen.

Hervorzuhebende Schritte sind somit die Implementierung eines individuellen Ziel-C/I-Pegels für jeden Sprach-Kodex. Dies ermöglicht eine Reduzierung des Interferenzpegels in dem gesamten Netz bzw. dem gesamten Funkbereich einer Basisstation BS durch die Beschränkung der Leistung auf den charakteristischen Pegel für jeden Sprach-Kodex und zusätzlich vorteilhafterweise für verschiedene Bedingungen bei der Verwendung von Kanälen mit zugelassenen bzw. nicht zugelassenen Frequenzsprüngen.

Vorteilhafterweise werden für Signalisierungskanäle separate Ziel-C/I-Werte definiert, wobei eine weitere Unterteilung entsprechend der Wichtigkeit verschiedener Signalisierungsnachrichten vorgenommen werden kann.

Ein erzwungener intrazellularer Handover kann durchgeführt werden, falls ein Ziel-C/I-Wert für eine teilnehmerseitige Station MS, welche einen bestimmten Sprach-Kodex verwendet und verwenden muss, nicht erreicht werden kann. Diese Funktionalität ermöglicht verschiedene teilnehmerseitige Stationen unter Verwendung der verschiedenartigen Sprach-Kodex in dem gleichen Netz zu betreiben, welches für eine hohe Kapazität geplant ist. Der Handover zu einem Kanal mit geringerer Interferenz, falls der Ziel-C/I-Wert nicht erreicht werden kann, ermöglicht den gewünschten Qualitätspegel beizubehalten. Anwendungen ergeben sich insbesondere im Fall einer GSM-Funkzelle, bei welcher derzeit ein einziger C/I-Wert von z.B. 13 dB angewendet wird. Durch die beschriebene Verfahrensweise können gemäß der beispielhaften Qualitäts-Sättigungspunkte verschiedene Ziel.-C/I-Werte angesetzt werden, z.B. können bei EFR 13 dB, bei GSM FR 13 dB und bei AMR FR 7 dB angesetzt werden. Dies führt zu einer Interferenzreduzierung im Netz. Durch die Interferenzreduzierung wird wiederum eine Erhöhung der fraktionalen Last und daher der Kapazität des Gesamtnetzes möglicht. Bei der gemischten Sprach-Kodex-Betriebsweise ermöglicht diese Funktionalität eine lineare Kapazitätserhöhung entsprechend den Penetrations-Raten, beispielsweise zwischen EFR und AMR, anstelle der Begrenzung der Kapazität durch eine Vorgabe des C/I-Wertes abhängig von der Leistungsfähigkeit der schwächsten Verbindung.

## Patentansprüche

1. Verfahren zum Erzeugen eines Sendesignals zum Übertragen von Sprache, Daten und/oder Signalisierungen über eine Funk-Schnittstelle (V) zwischen Stationen (MS, BS) in einem Funk-Kommunikationssystem (GSM), bei dem
- die Daten und/oder Signalisierungen bestimmten Übertragungserfordernissen zugeordnet sind,
- das Sendesignal mit einer eingestellten Leistung (PC; S2) erzeugt und übertragen wird und
- bei der Einstellung der jeweiligen Leistung ein Zielwert (C/I) verwendet wird,
**dadurch gekennzeichnet, dass**
- als der Zielwert für die Leistungseinstellung des Sendesignals ein Zielwert (C/I) aus einer Vielzahl, zumindest zwei möglichen Zielwerten (C/I) verwendet wird, wobei
- die möglichen Zielwerte (C/I) jeweils Übertragungserfordernissen zugeordnet sind und
- die möglichen Zielwerte (C/I) bei der Leistungseinstellung entsprechend der Zuordnung der zu übertragenden Daten und/oder Signalisierungen verwendet werden.

2. Verfahren nach Anspruch 1, bei dem
die Übertragungserfordernisse zu zu verwendenden Übertragungsdiensten zugeordnet sind.

3. Verfahren nach Anspruch 1 oder 2, bei dem
als die Übertragungserfordernisse Zielwerte für eine sehr gute, mittlere und noch akzeptable Verbindungsqualität definiert werden und das Funk-Kommunikationssystem je nach Auslastung und Priorität der Stationen eigenständig für diese Stationen zwischen den Zielwerten wechselt.

4. Verfahren nach einem vorstehenden Anspruch, bei dem
die Übertragungserfordernisse zu zu verwendenden Sprach-Kodex (GSM FR, GSM HR, EFR, AMR FR, AMR HR) oder Datenkodierschemata (GPRS CS1,....4 und EDGE MCS1,...9) zugeordnet sind.

5. Verfahren nach Anspruch 4, bei dem
bei hoher System-Last Stationen mit niedrigerer Priorität durch Verbindungsanpassung (Link Adaption) auf einen robusteren Kodex mit niedrigerer Übertragungsqualität gesetzt werden, für den geringere Zielwerte (C/I) eingestellt sind.

6. Verfahren nach einem vorstehenden Anspruch, bei dem
als die Zielwerte (C/I) Signal- bzw. Träger-zu-Interferenz-Verhältnisse, Frame-, Block-, Bitfehlerraten, Empfangsqualitätswerte und/oder Bitfehlerwahrscheinlichkeiten verwendet werden.

7. Verfahren nach einem vorstehenden Ansprüche, bei dem
aus der Vielzahl der Zielwerte als der Zielwert (C/I) zur Interferenzreduzierung im Funkbereich ein geringst möglicher Zielwert ausgewählt wird.

8. Verfahren nach einem vorstehenden Anspruch, bei dem
die Zielwerte (C/I) abhängig von der Nutzung von Übertragungskanälen mit oder ohne Frequenzhopping (f₁, f₂) und/oder mit oder ohne Antennenhopping verschieden festgelegt werden.

9. Verfahren nach einem vorstehenden Anspruch, bei dem
die Zielwerte abhängig von einer gemessenen Stationsgeschwindigkeit ausgewählt werden.

10. Verfahren nach einem vorstehenden Anspruch, bei dem
die Zielwerte (C/I) abhängig von lokalen Bedingungen, insbesondere räumlichen Hindernissen oder elektromagnetischen Störquellen am Sendeort, verschieden festgelegt werden.

11. Verfahren nach einem vorstehenden Anspruch, bei dem
die Zielwerte (C/I) für Übertragungen in einem Signalisierungskanal verschieden zu den für Übertragungen in Datenkanälen festgelegt werden und Abhängigkeit haben vom verwendeten Kodex-/Kodierschema im Datenkanal.

12. Verfahren nach Anspruch 11, bei dem
die Zielwerte (C/I) abhängig von der Wichtigkeit der Signalisierungsnachrichten zueinander verschieden festgelegt werden.

13. Verfahren nach einem vorstehenden Anspruch, bei dem
ein intrazellularer Wechsel auf eine andere Ressource, insbesondere einen anderen Kanal, durchgeführt wird, falls der vorgesehene Zielwert (C/I) nicht erreichbar ist, wobei die andere Ressource einen anderen, insbesondere anderen niedrigeren Zielwert zulässt.

14. Verfahren nach einem vorstehenden Anspruch, bei dem
ein intrazellularer Wechsel auf eine andere Ressource, insbesondere einen anderen Kanal, durchgeführt wird, falls der vorgegebene Zielwert (C/I) nicht erreichbar ist und die andere Ressource weniger durch Interferenz gestört wird oder mehr Leistung aussenden kann.

15. Verfahren nach Anspruch 14, bei dem
als die andere Ressource eine Ressource mit einer besseren Reuse-Planung als die ursprünglich verwendete Ressource ausgewählt wird.

16. Verfahren nach einem vorstehenden Anspruch, bei dem
als Übertragungserfordernis ein Sprach-Kodex gemäß GSM FR, GSM HR, EFR, AMR FR, AMR FR 12.2kbps,....,4.7kbps und/oder AMR HR, AMR HR 7.9kbps,....,4.7kbps und/oder ein GPRS- oder EDGE-Kodierschema verwendet wird.

17. Verfahren nach einem vorstehenden Anspruch, bei dem
der Leistungsregelungs-Zielwert eines Kodex bzw. Kodierschemas höher als die Verbindungsanpassungs-(Link Adaption)-Schwelle zu einem nächsthöheren Kodex/Kodierschema ausgelegt ist und bei dem im Falle von System-Laständerungen neben den Leistungsregelungs-Zielwerten auch die Verbindungsanpassungs-Schwellen adaptiert werden.

18. Kommunikationssystem-Vorrichtung, insbesondere Basisstation (BS), in einem Funk-Kommunikationssystem (GSM) mit einer Steuereinrichtung (CA) und einer Speichereinrichtung (M) zum Betreiben der Vorrichtung (BS) und einer Datenübertragung über eine funkgestützte Verbindung (V),
**dadurch gekennzeichnet, dass**
- in dem Speicher (M) eine Tabelle mit verschiedenen Zielwerten (C/I) für verschiedene Übertragungserfordernisse, insbesondere Sprach-Kodex, hinterlegt ist und
- die Steuereinrichtung (CA) zur Bestimmung eines Leistungspegels (PC) für das Sendesignal jeweils abhängig von dem für die zu übertragenden Daten und/oder Signalisierungen zugeordneten Übertragungserfordernis zugeordneten Zielwert ausgelegt ist.
